# EUROPÄISCHE PATENTANMELDUNG

(11) **EP 1 469 566 A2**
(43) Veröffentlichungstag der Anmeldung: **20.10.2004**
(21) Anmeldenummer: 03013700.4
(22) Anmeldetag: 17.06.2003
(51) Int. Cl.: H01R 39/38, H02K 5/14

(54) **Rückhalteelement für Kohlebürsten eines Kommutatormotors**

(30) Priorität: 15.04.2003 DE 10317426
(71) Anmelder: Elektra GmbH Schalkau, 96526 Schalkau (DE)
(72) Erfinder: Schindhelm, Andreas, D-98749 Steinheid (DE); Bock, Isbert, D-96528 Döhlau b/Sonneberg (DE); Schwarz, Jürgen, D-96515 Sonneberg (DE)
(74) Vertreter: Creutz, Dieter

(57) **Zusammenfassung**

Die Erfindung betrifft ein Rückhalteelement für Kohlebürsten eines Kommutatormotors während der Paarungsphase des Ankers mit der Bürstenbrücke bei der Montage des Motors.

Das erfindungsgemäße Rückhalteelement ist als dünne und elastische Kreisringscheibe mit am Umfang radial gerichteten und gegen deren Ebene abgewinkelt ausgebildeten, federnden Zungenlappen ausgebildet, deren Anzahl und Winkelteilung den vorhandenen Kohlebürsten entsprechen.

Mit der Erfindung wird ein Rückhalteelement geschaffen, dessen Entriegelung durch den normalen Montage- Fügevorgang vollzogen werden kann, ohne notwendigen Eingriff manuell oder automatisch von außen. Auch soll eine Wiederholung des Rückhaltezustands und erneute Entriegelung möglich sein.

Die erfindungsgemäße Lösung ermöglicht es zudem, einem elementar üblichen Bauelement eines solchen Kommutatormotors und zwar der für den Axialspiel-Ausgleich der Lagerung notwendigen Wellfeder die Zusatzfunktion zu übertragen, wobei die Gestaltänderung fertigungstechnisch unerheblich ist und insbesondere eine zulieferfähige Baugruppe Bürstenbrücke mit / ohne Lagerschildverbund zu schaffen.

## Beschreibung

Die Erfindung betrifft ein Rückhalteelement für die Kohlebürsten eines Kommutatormotors während der Paarungsphase des Ankers mit der Bürstenbrücke bei der Montage des Motors.

Um den Kohlebürsten einen guten reibschlüssigen und den Stromflussübergang begünstigenden Kontakt mit der zylindrischen Kommutatoroberfläche zu sichern sind diese in den auf der Trägerplatte der Bürstenbrücke angeordneten Führungsschächten, Bürstenhalter genannt, durch eine Druckfeder so stark beaufschlagt, daß ihre später auf dem Kommutator aufsetzende Stirnfläche in der Vorfertigungs-Ruhelage der Bürstenbrücke radial einwärts den projeziert zu denkenden Hüllkreis der Kommutatoroberfläche überschreitet.

Bei der Motormontage ergibt sich so die Notwendigkeit , beim Fügen des Ankers mit der ringförmigen Bürstenbrücke die sonst in Kollisionslage befindlichen Kohlebürsten gegen deren Federkraft so weit zurückzudrücken oder geeignet zurückzuhalten, daß der Anker hindurchgeführt werden kann ohne mit dem Kommutator an den Bürsten anzustoßen.

Es hat nicht an Bemühungen und erfindungsgemäßen Vorschlägen und Lösungen gefehlt, die Bürstenbrücken komplett bestückt und funktionsfähig einbaufertig als Baugruppe so vorzufertigen , dass den beiden widersprüchlichen Bedingungen einer kollisionsfreien Bürstenhalterung bei der Montage und dem federbelastet reibschlüssigen Aufsetzen auf dem Kommutator für den Motorbetrieb gleichermaßen Rechnung getragen wird.

Bekannt ist die von Zulieferern solcher vorgefertigter Bürstenbrücken angewendete Lösung, mit einer geschlitzten Kunststoff-Bundbuchse , die zwischen die Bürsten gesetzt und von deren Federkraft gehalten wird, den benötigten Fügeraum des Kommutators freizuhalten und im formschlüssig schiebenden Austausch bei der Ankermontage von ihm axial ausgestoßen zu werden.
Diese Bundbuchsen sind wiederverwendbare Rücklaufteile, müssen aber extra hergestellt, bevorratet und logistisch behandelt werden.

Nach DE 33 28 683 C2 haben die (Köcher-)Führungsschächte eine an einer Längsseite ausgebildete federnde Rastzunge, die in eine Tasche der Kohlebürste mittels einer Winkelnocke zurückhaltend eingreift. Durch Betätigen des freien Schenkels der Rastzunge konnte nach der Montage mit dem Anker die Rückhaltung aufgehoben werden und die Bürste gelangt zu funktionsgerecht federnder Anlage. Das soll auch automatisch möglich sein Nachteilig an dieser Lösung ist der Mehraufwand bei der Fertigung der Bürsten und die oft nicht gegebene Zugänglichkeit solcher Rastzungen mit einem Werkzeug nach Montage der Bürstenbrücke in die meist topfförmigen Gehäuseüberhänge des Stators.

Alternativ bietet die gleiche Patentschrift die Variante, die Rastzunge zusammen mit der Bürstenträgerplatine aus Kunststoff auszubilden und die Entarretierung durch Wegschieben des freien Zungenschenkels mittels eines am inneren Gehäuseüberhang ausgebildeten Anschlags durch Relativbewegung der Bürstenbrücke bei ihrem Einsetzen in den Stator und über den bereits positionierten Anker mit Kommutator hinweg auszulösen.

Die heutzutage übliche packungsdichte Bestückung der Bürstenbrücken lässt wenig Bewegungsfreiheit für den Eingriff mit solchen radial zugestellten Werkzeugen, außerdem muss die Betätigungsöffnung im Gehäuse zulässig sein.

Mit der Patentschrift DE 36 29 138 C2 versucht man die Nachteile von Gehäusemantel-Öffnungen für das Entriegeln der Rastzungen zu kompensieren, indem man deren freie Enden als formschlüssig in die Betätigungsöffnungen einfallende Köpfe gestaltet und solche Öffnungen außer im gerollten Gehäusemantel alternativ auch im Lageschilddeckel als Montageträger der Bürstenbrücke zulässt.

Eine axiale Relativbewegung zwischen Gehäuse und Bürstenbrücke bewirkt auch in diesem Falle die Entriegelung.
Wippenartige Schnapphaken schlägt die DE- G 89 10 426-9 U 1 vor.

Durch die DE 199 49 081 A1 wird deshalb vorgeschlagen, einem ohnehin benötigten Bauelement der Ankergruppe die Zusatzfunktion einer zeitweiligen Bürstenrückhaltung zu übertragen. Bei diesem Bauelement handelt es sich um die Schleuderscheibe, die zwischen Kommutator und Wellenlager auf der Welle sitzend Bürstenabrieb vom Lager fernhalten soll bzw. Öl- und Fettbestandteile des Lagers vom Kommutator.
Schleuderscheibe und Trägerplatte der Büstenbrücke sind erfindungsgemäß aus Kunststoff und werden mit drei um 120° versetzten Sollbruchstellen verbunden zunächst als zusammenhängendes Teil hergestellt. Dabei bietet ein Rückhaltering der Schleuderscheibe die benötigte Arretierfunktion für die Bürsten.
Durch die axiale Relativbewegung des Ankers zum Stator und der an ihm befestigten Bürstenbrücke unter pressender Mitnahme der Schleuderscheibe und ihrer Verschiebung in die funktionsgerechte Endlage kommt es zum Abscheren der Sollbruchstellen in solcher Weise, dass keine zu entsorgenden Abbruchteilchen anfallen.

Die Nutzung dieser Erfindung bleibt jedoch auf Kommutatormotoren beschränkt, die eine solche Schleuderscheibe besitzen bzw. unabdingbar benötigen.

Auch in der DE 40 27 243 A1 stellt man das Ziel, die in der DE 36 29 138 (siehe oben) vorgeschlagenen Rastzungen bzw. Rasthebel wegen ihrer zum Entriegeln erforderlichen Durchbrüche im Gehäuse oder dem Lagerschild als dem Staubschutz abträglich durch eine Zusatzgestaltung und Zusatzfunktion eines ohnehin vorzusehenden Bauteiles zu ersetzen. Dessen Primärfunktion ist eine Abdichtung des stauberzeugenden Bürstenraumes gegen die Wellenlagerung durch eine Kappe, die bundartig an der Bürstenträgerplatine einerseits und lippenartig anliegend an der Welle zwischen Kommutator und Lager plaziert wird.
Diese Kappe ist zylinderhutartig geformt, besteht aus einem thermoplastischen Polyesterelastomer und hat zwischen der relativ formsteifen Krempe und dem mit etwa Wellendurchmesser zentrisch gelochten Kopfteil mindestens eine ringförmige Wandverdünnung als Sollschwachstelle für eine umstülpende Deformierung des Kopfteils unter Wirkung einer axialen Schiebekraft an der zentrischen Lochung solcherart, dass dann die gelochte Deckwand des Kopfteiles hinter die Ebene der als Krempe bezeichneten Halterung an der Bürstenträgerplatine zu liegen kommt. Vor dieser Umformung liegt die kegelstumpfförmige Mantelwandung des Kopfteils an den federbelasteten Kohlebürsten an und hält diese damit zurück. Der Anker mit Kommutator wird bei der Montage mit dem Wellenstumpf voran in die zentrische Lochung geführt, vollzieht in axialer Weiterbewegung das stulpenartige Umklappen des Kopfteiles , nimmt dessen Umfangslage ein und gibt die Kohlebürsten zur Anlage frei. Die umgestülpte Kappe befindet sich danach in funktionsgemäßer Abdichtanordnung.

Nachteilig an dieser Lösung ist zweifellos die vorausgesetzte Verwendung eines solchen spezifischen Abdichtelementes, das keineswegs den standardmäßigen Grundbauelementen eines Kommutatormotors zuzurechnen ist.

Die DE 296 14 358 hält die vorstehend beschriebene Arretierlösung wegen ihres erhöhten bzw. zusätzlichen Fertigungsaufwandes für ungeeignet im Falle einer Massenproduktion.
Die stattdessen vorgeschlagene Lösung besteht wieder in einer Verwendung von Rasthaken oder Sperrklinken, die eine Arretier- und eine Freigabeposition einnehmen können, im Gegensatz zu den weiter oben bereits beschriebenen Ausführungen mit Flankeneingriff in Bürstentaschen nun hier mit Wirkung unmittelbar am Austrittsende der Bürstentasche konzipiert sind. Sie sind einstückig an das Bürstengehäuse angespritzt, haben einen Drehpunkt mit plastischer Deformation - alternativ auch elastischer Deformation - , was eine Fixierung in jedem der beiden Lagezustände sichert und nutzen bewusst die Schrägungsfläche der Bürstenstirnseite für die Schwenkung aus, die durch Krafteinwirkung von außen, manuell oder automatisch, jedoch nicht nachvollziehbar beschrieben, ausgelöst wird.

Mit der DE 198 21 053 C2 wird wieder davon ausgegangen, die Sperrfunktion einem wellenkonzentrischen Bauteil zu übertragen und seine Entriegelungsfunktion durch die axiale Fügebewegung des dabei anstoßenden Kommutators einzuleiten, die diesen im Austausch gegen das sperrende Bauteil mit den freigegebenen Bürsten paart.

Das hierfür benutzte Bauteil ist eine Schutzhülse, wie sie bei Kommutatormotoren bei Anflanschung an ein Hydraulikteil zur Abweisung von Leckageflüssigkeit vorgesehen wird, beschrieben in den DE 42 35 962 C2 und DE 92 19 131 U1. Diese Schutzhülse besitzt speziell für ihre Interimsfunktion als Bürsten-Rückhalteelement einen Ringbund, an den der zu fügende Kommutator drückend und freigebend ansetzt. Merkmal der Gesamtlösung ist es auch, dass die Bürstentragplatte zugleich anstelle eines (Zwischen-)Lagerschildes den Motor vom Hydraulikteil abdichtend trennt.

Diese Erfindung erlaubt bereits eine selbsttätige Entriegelung durch den Kommutatorfügevorgang selbst ohne Zugänglichkeit des Bürstenraumes von außen zu bedingen.
Die Schutzhülse ist jedoch ein nicht für alle Kommutatormotoren zutreffendes Standardbauteil und somit ist der nutzbare Anwendungsbereich beschränkt auf Motor-Hydraulik-Komponenten.

Nachteil sämtlicher ermittelter Lösungen des Standes der Technik ist, dass es noch keine einfache, preiswerte und allgemein anwendbare Bürstenrückhalterung für das kollisionsfreie Fügen bei der axialen Relativbewegung von Kommutatoranker und Bürstenbrücke während der Motorenmontage gibt.

Aufgabe der Erfindung ist es ein Rückhalteelement zu schaffen, dessen Entriegelung durch den normalen Montage- Fügevorgang vollzogen werden kann, ohne notwendigen Eingriff manuell oder automatisch von außen. Auch soll eine Wiederholung des Rückhaltezustands und erneute Entriegelung möglich sein.

Die Aufgabe wird erfindungsgemäß dadurch gelöst, indem das Rückhalteelement als dünne und elastische Kreisringscheibe (1) mit am Umfang radial gerichteten und gegen deren Ebene abgewinkelt ausgebildeten, federnden Zungenlappen (6) gestaltet ist. Anzahl und Winkelteilung der so gestalteten Zungenlappen (6) entspricht den vorhandenen Kohlebürsten (10).

In einer Montageanfangsstellung werden unter rückhaltendem form- und/oder kraftschlüssigem Eingriff der Zungen lappen (6) die durch Federn (11) beaufschlagten Kohlebürsten (10) zurückgehalten und befinden sich dabei in einer frei ausgespannten konzentrischen Lage.

Bei der Montagerelativbewegung zwischen Anker (3) einerseits und Bürstenbrückenplatine (7) andererseits wird, vom Lager (4), das auf der Welle (5) vor dem Kommutator (2) sitzt, die erfindungsgemäße Kreisringscheibe (1)axial mitgenommen, wobei die Zungenlappen (6) entriegelnd weggezogen und so die Kohlebürsten (10) zur Anlage am Kommutator (2) freigeben werden.

Vor Beginn des Fügevorganges befindet sich die erfindungsgemäße Kreisringscheibe (1) über ihre arretierten Zungenlappen frei mittig zentriert vor dem Wellendurchlaß der Bürstenbrücke in Richtung Lagersitz. Dabei kann in spezifischer Ausgestaltung die Bürstenbrücke mit dem Lagersitz auch baulich eine Einheit bilden, wie dies für Motor-Hydraulikpumpen beispielsweise bewährt ist.
Je nachdem, ob das Wellenende des Ankers auf der Kommutatorseite bündig mit dem aufgesetzten Kugellager endet oder ob es als freies Wellenende darüber hinaus ragt - um zum Beispiel außerhalb des Lagersitzes noch als Aufnahme für ein anderes Bauteil, wie Sensorscheiben oder dergleichen zu dienen - wird die Kreisringscheibe zuerst von einem solchen freien Wellenende durchsetzt ehe das Kugellager schiebend drückt oder sofort dem Schub des Kugellagers ausgesetzt.

Beim Fügevorgang wird die Kreisringscheibe von dem auf der Ankerwelle dem Kommutator vorgesetzten Kugellager drückend erfaßt und in axialer Fügebewegung werden die Zungenlappen zeitlich parallel zum Einnehmen der funktionsgemäßen Kommutatorposition aus der Arretierung gezogen und geben rechtzeitig die gefederten Bürsten zur Anlage auf dem Kommutator frei.

Dem Kommutator wird bei der Komplettierung des Ankers für den Montagevorgang schon dieses Kugellager auf das Wellenende vorgesetzt. Das Kugellager hat stets einen Außendurchmesser , der etwas kleiner ist als der des Kommutators. Beim Fügen des Kommutators mit dem Bürstenbereich passiert damit als erstes das Kugellager diese Paarungszone

Gleichzeitig hierzu erfolgt eine lagesichernde Paarung von Kugellager und Kreisringscheibe, wobei die Zungenlappen durch Konturausnehmungen der Platine hindurch formschlüssig in Taschen am Lagersitzumfang geparkt werden. Sie bleiben so wiederverwendbar falls eine Wiederholung des Montagevorgangs erforderlich wird.

Eine besonders bevorzugte Ausführungsform besteht darin, dass das Rückhalteelement als Wellfeder (**1**) ausgebildet ist. In diesem Fall nimmt die Wellfeder (**1**) bei einer Montageendstellung gleichzeitig die Funktion als Lagerungsbauelement zum Axialspielausgleich ein.

Kommutatormotoren verwenden zur Ankerlagerung in der Regel ein einstellbares Kalottenlager auf der Abtriebsseite und ein Kugellager auf dem entgegengesetzten Wellenende bzw. an der Kommutator-oder Bürstenseite des Ankers bzw. Motors.

Es ist ganz allgemein für Elektromotoren der Serienbaureihen, die Kommutatormotoren eingeschlossen, üblich und bewährt, zum Ausgleich thermisch bedingter Längenänderungen der Welle wie auch belastungsbedingter axialer Verschiebekräfte das Kugellager der Nichtantriebsseite bzw. der Bürstenseite bei Kommutatormotoren mit Schiebesitz im Lagerschild zu führen und zwischen Kugellager und Lagersitzboden eine Wellfeder zum Ausgleich des sogenannten Axialspieles zu platzieren.

Die mit dem Kugellager zusammenwirkende Wellfeder bisher üblicher Ausführung aus dünnem Federstahl hat in Draufsicht Kreisringform und lässt in Seitenansicht symmetrisch zu einer gedachten Blechdicken-Mittellinie eine wellenartige Kontur erkennen, erzeugt durch über den Kreisringumfang gleichmäßig verteilte Wellen, alternierend ausgelenkt zur Unter- bzw. Oberseite der ursprünglich ebenen Kreisringscheibe. Das elastische Deformationsvermögen dieser Wellfeder wird zum Axialspielausgleich genutzt.

Bei der Motorenmontage muß zum Fügen von Kugellager und Lagersitz die Wellfeder in der Regel in den in Wannenlage positionierten Lagersitz des Lagerschildes lose und manuell eingelegt werden, hält sich adhäsiv durch leichte Fettung und zentriert sich dabei am Lagersitzumfang. Dann kann vertikal von oben der Anker mit seinem Kugellager gefügt werden.

Erfindungsgemäß wird eine Wellfeder der oben als bisher übliche Ausführung beschriebenen Gestalt an ihrer Außenkontur mit abgewinkelten Zungenlappen versehen, die als Rückhaltemittel für die Bürsten dienen.
Die Anzahl und Anordnung dieser Zungenlappen entspricht der Anzahl und der Winkelteilung der Bürsten bezogen auf den Kommutatorumfang.

Mit diesen Zungenlappen wird die Wellfeder bei der Baugruppenvorfertigung der Bürstenbrücke form-und/oder kraftschlüssig selbsthaltend so an / vor der Austrittsöffnung der Bürstenführungstasche arretiert, daß die federbelasteten Kohlebürsten an ihnen anstossend zurückgehalten werden.
Die gute Zugänglichkeit der Bürstenbrücke bei der Vormontage erlaubt es wahlweise, die Rückhalte-Wellfeder vor oder nach dem Einsetzen der Bürsten zu plazieren.
Mit dem Herstellen der Arretierung und der Bürstenrückhaltung wird die Wellfeder zugleich auf die Motorachse zentriert.
Die funktionswirksame Länge der rückhaltenden Zungenlappen kann man den gegebenen Abmessungen und Fügewegen bei der Paarung von Kommutator und Bürstenbrücke optimierend anpassen.
Die Zungenlappen liegen durch ihre aus der Vorfertigung herrührende Winkelstellung durch dann parallelflankige Arretierung unter Vorspannung an und sind so gegen unbeabsichtigtes Herausfallen beim Handhaben der Baugruppe gesichert.

Die der Bürstenrückhaltung dienende erfindungsgemäße Kreisringscheibe (1) kann nicht nur hinsichtlich dieser Zusatzfunktion vielseitig variiert werden, so nach Anzahl und Lage der Zungenlappen, wie bereits dargelegt, sondern auch hinsichtlich ihrer eigentlichen Funktionsbestimmung für den Axialspielausgleich der Lagerung.

So können statt der Wellung für die das Lagerspiel ausgleichende Elastizitätseigenschaft mit ihrem Federweg auch zusätzlich sichelförmige Federzungen an einer dann ebenen Kreisringscheibe durch spiraligen Schlitzeintrag und gegensinnig zu den Zungen lappen erfolgende doppelte Kröpfung ausgebildet werden, die nach Art von Federbeinen den Federweg für den elastischen Axialspielausgleich des Lagers sichern.

Diese Federzungen gehen rechtwinklig von den Zungenlappen-Anbindungen am Kreisring ab, sind dann aber in Draufsicht auf die Kreisringscheibe tangential gerichtet mit einer sichelförmigen Kontur, diese begrenzt innerhalb eines zum inneren Kreisring konzentrisch zu denkenden Hüllkreises.
Diese Federzungen gehen nicht nur an den Stellen ab, wo sich Zungenlappen befinden, sondern zusätzlich auch an weiteren Stellen zwischen diesen Zungenlappen.
Es wird im Folgenden auch bei dieser Variante von einer Wellfeder gesprochen, obwohl sie mangels Wellungen diese Bezeichnung eigentlich nicht verdient, jedoch der durchgängig einheitlichen Begriffsverwendung wegen.

Das erfindungsgemäße Rückhalteelement kann eine besondere Ausgestaltung erhalten, indem die Zungenlappen (6) außen eine eingeprägte Querrille (13) für kraftschlüssige Arretierung an einer Kante bei der Bürstenführung (8) besitzen.

Eine weitere besondere Ausgestaltung kann das Rückhalteelement durch die Innenbohrung der Kreisringscheibe(1) bekommen, indem diese einen stabilisierenden und fügebegünstigenden konischen Durchzug (14) besitzt.

Die erfindungsgemäßen Rückhalteelemente lassen sich als Stanz-Prägeteile in allgemein bekannter Weise herstellen wie die normalen Wellfedern. Das macht die erfindungsgemäße Lösung kostengünstig.

Das Rückhalteelement kann neben der üblichen Stahlblechausführung erfindungsgemäß auch aus einem Kunststoffspritzteil bestehen.
So kann die Herstellung der formschlüssigen Arretiermittel für die Zungenlappen im Zuge der Herstellung der Bürstenführungstaschen oder der Basisplatine entweder stanztechnisch bei Blechausführung oder spritzgießtechnisch bei Kunststoffausführung realisiert werden.

Ein besonderes Merkmal der erfindungsgemäßen Lehre besteht darin, dass das Rückhalteelement im Bedarfsfall mehrfach verwendbar ist.

Die Vorteile der erfindungsgemäßen Lösung für ein Rückhalte-Element für Kohlebürsten eines Kommutatormotors bestehen darin, einem elementar üblichen Bauelement eines solchen Kommutatormotors und zwar der für den Axialspiel-Ausgleich der Lagerung notwendigen Wellfeder die Zusatzfunktion zu übertragen, wobei die Gestaltänderung fertigungstechnisch unerheblich ist und dies in Varianten möglich, und insbesondere eine zulieferfähige Baugruppe Bürstenbrücke mit / ohne Lagerschildverbund geschaffen werden kann, die alle vorkommenden Relativbewegungen und Operationsfolgen bei der Motormontage zulässt, vor allem auch keine Sicht auf die Fügestelle Bürsten / Kommutator benötigt und keine separaten nachträglichen Entriegelungsverrichtungen und dass dies den Weg eröffnet zu einer wirklich automatisierten Montage von Kommutatormotoren

Die Erfindung wird nachfolgend an mehreren Ausführungsbeispielen näher erläutert.

Dabei zeigen die beigefügten Zeichnungen :
**Fig. 1** die Draufsicht auf ein Beispiel eines erfindungsgemäßen Rückhalteelements
**Fig. 2** eine Seitenansicht des Rückhalteelements aus Fig. 1
**Fig. 3** eine Seitenansicht des Rückhalteelements in Richtung auf die Zungenlappen
**Fig. 4** eine perspektivische Ansicht des erfindungsgemäßen Rückhalteelements
**Fig. 5a** in perspektivischer Ansicht das Beispiel einer Bürstenhaltergruppe mit arretierend gefügtem erfindungsgemäßen Rückhalteelement
**Fig. 5b** in perspektivischer Ansicht das Beispiel einer Bürstenhaltergruppe mit entriegeltem erfindungsgemäßen Rückhalteelement
**Fig. 6a** einen Schnitt durch die Ansicht nach **Fig. 5a**
**Fig. 6b** einen Schnitt durch die Ansicht nach **Fig. 5b**

### Auflistung der Positionsnummern-Bezeichnungen

**1.** Kreisringscheibe ; Wellscheibe ; Wellfeder
**2.** Kommutator
**3.** Anker
**4.** Lager
**5.** Welle
**6.** Zungenlappen
**7.** Bürstenbrückenplatine
**8.** Bürstenführung
**9.** Schlitz
**10.** Kohlebürste
**11.** Feder
**12.** Lagersitz
**13.** Querrille
**14.** konischer Durchzug
**15.** Tasche
**16.** Federzunge

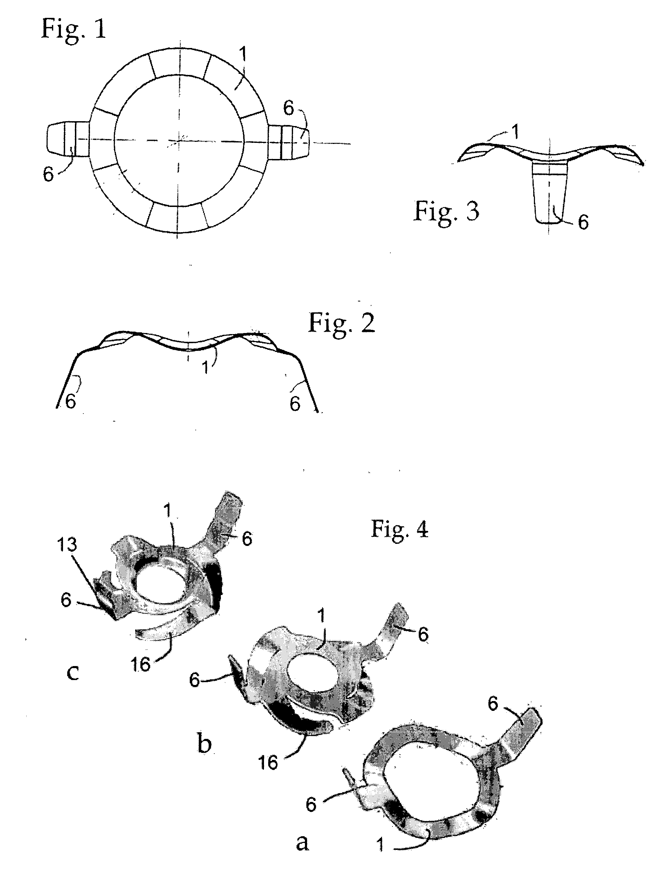

In **Fig. 1** hat eine aus dünnem elastisch federndem Material gefertigte Kreisringscheibe **1** zwischen ihrem Außendurchmesser und dem Innendurchmesser vertiefte Ausbuchtungen und erhöhte Ausbuchtungen und dies alternierend mit fließenden Übergängen nach Art einer umlaufend ausgebildeten Welle und fungiert damit als Wellfeder.
Erfindungsgemäß wird die Kreisringscheibe an zwei gegenüberliegenden Abschnitten durch Konturerweiterung auf zwei Zungenlappen **6** vervollständigt.

In **Fig. 2** wird die Wellengestalt der Kreisringscheibe mit ihren konvexen Sektoren und den konkaven Sektoren deutlicher erkennbar, auch dass die Scheibe aus sehr dünnem Material besteht und dass die ausladenden Zungenlappen **6** schräg abwärts gerichtet sind.

In **Fig. 3** blickt man in gleicher Ebene wie in **Fig. 2** auf die Wellscheibe **1,** nun aber in Richtung auf die Zungenlappen **6** und erfasst so deren trapezförmige Kontur.

In **Fig. 4a** gewinnt man einen perspektivischen Eindruck von einer erfindungsgemäß durch Zungenlappen **6** vervollständigten Wellfeder, deren Kreisring die typische Wellung aufweist. In **Fig. 4b** ist perspektivisch eine zusätzlich noch durch Federzungen **16** ergänzte Wellfeder gezeigt, deren Kreisring **1** ungewellt, also eben ist. **Fig. 4c** zeigt eine Variante von **Fig. 4b**, wo das Mittenloch des Kreisrings **1** einen konischen Durchzug **14** besitzt. Außerdem hat in diesem Falle der Zungenlappen eine der Rückhalte - Arretierung dienende geprägte Querrille **13**.

Die gezeigten Wellfedern bestehen aus rostbeständigem Stahlblech, sind gestanzt und geprägt sowie erforderlichenfalls gehärtet und haben eine entsprechende Federkennlinie. Damit sind auch die elastischen Eigenschaften der als Rückhalteelement dienenden Zungenlappen definiert. Die Verwendung anderer Materialien und Verfahrensschritte zu ihrer Herstellung, soweit sie die gleichen Funktionseigenschaften ergeben, wird als dem Fachmann geläufig in die Erfindungslösung einbezogen.

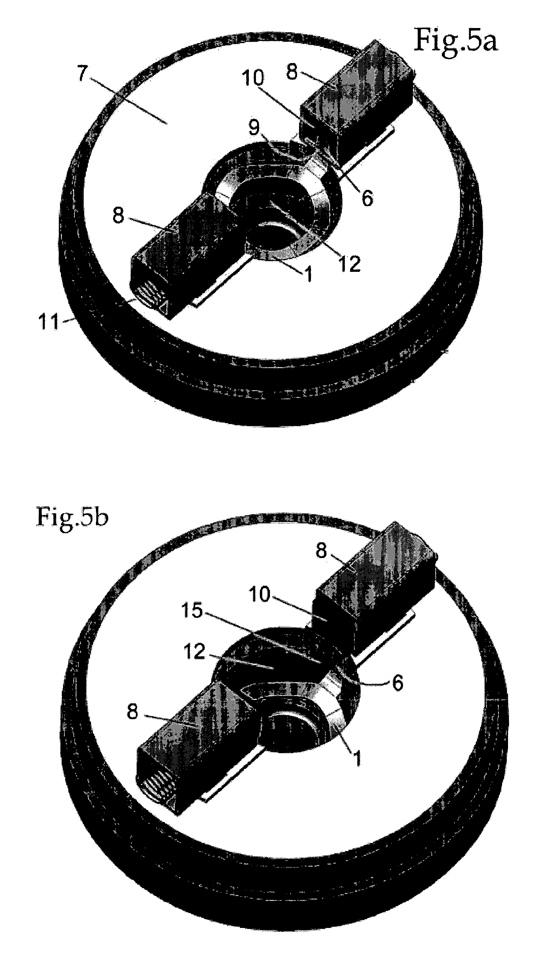

In **Fig. 5** wird die bestimmungsgemäße Verwendung des erfindungsgemäßen Rückhalteelements an einem Ausführungsbeispiel gezeigt.

Auf einer Bürstenbrückenplatine **7** sind paarig zwei Bürstenführungen **8** für Kohlebürsten **10** angeordnet.
Im Bereich der Kohlebürsten-Austrittsöffnung der Bürstenführung **8** ist in deren Boden ein Schlitz **9** vorhanden, dessen Abmessungen dem Querschnitt der Zungenlappen **6** der Wellfeder **1** angepasst sind.
In das Schlitzpaar **9** der Bürstenführungen wird die Wellfeder **1** mit ihren Zungenlappen **6** gesteckt und hält sich hier unter elastischer Federung ihrer nun parallel zueinander gestellten Zungenlappen **6** einerseits wie auch durch den Klemmeffekt der konischen Lappenkontur.

Die unter Druckbeaufschlagung durch die Federn **11** eingesetzten Kohlebürsten **10** werden nun von den durch die Schlitze **9** ragenden Zungenlappen zurückgehalten.

Damit ist für die Montage-Paarung des Ankers (nicht gezeigt) und seines Kommutators **2** (gleichfalls als bekannt vorausgesetzt und nicht dargestellt) sowie der Bürstenbrückenplatine **7** ein axial fluchtend kollisionsfreier Bereich geschaffen.

In erfindungsgemäß vorteilhafter Weise ist die Wellfeder zugleich selbst so fixiert, dass bei der Motorenmontage das Bürstenbrücken-Lagerschild-Verbundteil mit nach unten weisender Platinenseite **7** und justiert über den Bund zum Lagerschild- Aussendurchmesser in ein Motorengehäuse gefügt werden kann.

Mit der Welle **5** (nicht gezeigt) und dem vor dem Kommutator **2** aufgezogenen Lager **4** voran wird der Anker **3** gegen die Wellfeder **1** geführt, nimmt sie bei Weiterbewegung mit, wobei zugleich die Zungenlappen **6** aus den Arretierschlitzen **9** gleiten. Die Haltelänge der Zungen lappen **6** ist so bemessen, dass bei Bürstenfreigabe der Kommutator **2** als betriebsmäßige Anlage der gefederten Kohlebürsten **10** plaziert ist.

Wie in **Fig. 5b** gezeigt wird nimmt die Wellfeder 1 im Ergebnis der Montagebewegung ihre funktionsgemäße Position unter dem Lager 4 (nicht gezeigt) am Boden des Lagersitzes **12** ein.

Im Ausführungsbeispiel der **Fig. 5** ist die Bürstenbrückenplatine **7** identisch mit einem Lagerschild und in diesem ausgebildeten Lagersitz **12.**
Dieser zylinderwandige Lagersitz hat zwei seitliche Taschen **15,** in die die Zungenlappen **6 sich** über eine Führungsschräge entlastet ausklappen.

Sollte es erforderlich sein, den Rückhaltezustand für die Bürsten nochmals herzustellen, dann wird die Wellfeder unter Einrasten ihrer Zungenlappen **6** in die Schlitze **9** zurückgeführt. Das kann beliebig wiederholt werden.

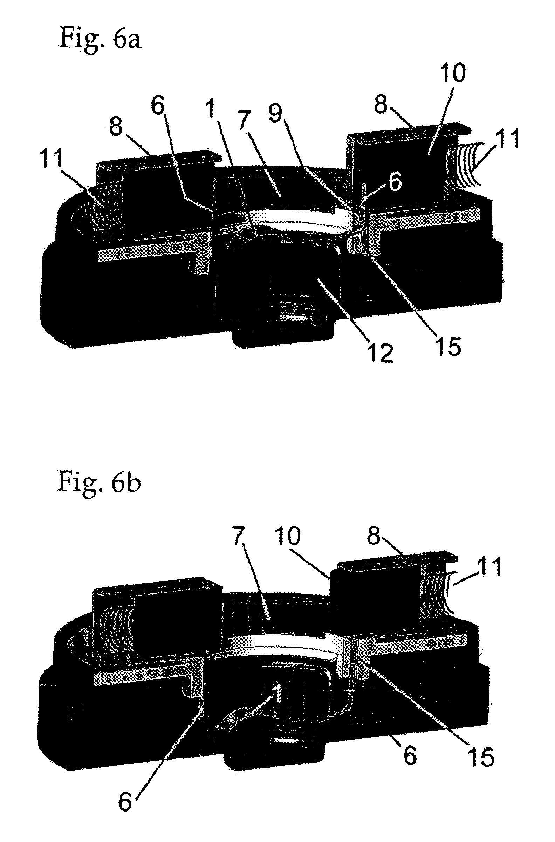

In **Fig. 6** werden mit Schnittdarstellungen **Fig. 6a-** abgeleitet aus **Fig. 5a-** und **Fig. 6b -** abgeleitet aus **Fig. 5b -** der Arretierzustand der Wellfeder als Rückhalte-Element für die Bürsten bzw. der Endzustand nach Motormontage ( entriegelte Bürsten) ergänzend gezeigt. Die verwendeten Positions-Nummern sind dabei identisch.

## Patentansprüche

1. Rückhalteelement für die Kohlebürsten eines Kommutatormotors während der Paarungsphase des Ankers mit der Bürstenbrücke bei der Montage des Motors, **dadurch gekennzeichnet, dass** das Rückhalteelement als dünne und elastische Kreisringscheibe (1) mit am Umfang radial gerichteten und gegen deren Ebene abgewinkelt ausgebildeten, federnden Zungenlappen (6), deren Anzahl und Winkelteilung den vorhandenen Kohlebürsten (10) entsprechen, gestaltet ist, in einer Montageanfangsstellung unter rückhaltendem form- und/oder kraftschlüssigem Eingriff der Zungenlappen (6) die durch Federn (11) beaufschlagten Kohlebürsten (10) zurückhält und sich dabei in einer frei ausgespannten konzentrischen Lage befindet, bei der Montagerelativbewegung zwischen Anker (3) einerseits und Bürstenbrückenplatine (7) andererseits vom Lager (4), das auf der Welle (5) vor dem Kommutator (2) sitzt, axial mitgenommen wird, wobei die Zungenlappen (6) entriegelnd weggezogen werden und so die Kohlebürsten (10 zur Anlage am Kommutator (2) freigeben.

2. Rückhalteelement für die Kohlebürsten eines Kommutatormotors nach Anspruch 1, **dadurch gekennzeichnet, dass** das Rückhalteelement als Wellfeder (1) ausgebildet ist und bei einer Montageendstellung als Lagerungsbauelement eine zum Axialspielausgleich dienende Position einnimmt.

3. Rückhalteelement für die Kohlebürsten eines Kommutatormotors nach Anspruch 1, **dadurch gekennzeichnet, dass** das Rückhalteelement als dünne, elastische Kreisringscheibe (1) ausgebildet ist, bei der die Federkennlinie für den Axialspielausgleich über gekröpfte sichelförmige Federzungen (14), die am Umfang der Kreisringscheibe (1) auf Winkelposition der Zungenlappen (6) und/oder dazwischen angeordnet sind, realisiert ist.

4. Rückhalteelement für die Kohlebürsten eines Kommutatormotors nach Anspruch 1, **dadurch gekennzeichnet, dass** die Zungenlappen (6) außen eine eingeprägte Querrille (13) für kraftschlüssige Arretierung an einer Kante bei der Bürstenführung (8) besitzen.

5. Rückhalteelement für die Kohlebürsten eines Kommutatormotors nach Anspruch 1 und 3 , **dadurch gekennzeichnet, dass** die Innenbohrung der Kreisringscheibe(1) einen stabilisierenden und fügebegünstigenden konischen Durchzug (14) besitzt.

6. Rückhalteelement für die Kohlebürsten eines Kommutatormotors nach Anspruch 1, **dadurch gekennzeichnet, dass** das Rückhalteelement aus einem Kunststoffspritzteil besteht.

7. Rückhalteelement für die Kohlebürsten eines Kommutatormotors nach Anspruch 1, **dadurch gekennzeichnet, dass** das Rückhalteelement mehrfach verwendbar ist.
